Europäisches Patentamt

European Patent Office

Office européen des brevets

(19)

(11) Veröffentlichungsnummer : **0 123 724**
**B1**

(12) **EUROPÄISCHE PATENTSCHRIFT**

(45) Veröffentlichungstag der Patentschrift :
16.06.87

(21) Anmeldenummer : 83110579.6

(22) Anmeldetag : 22.10.83

(51) Int. Cl.⁴ : **F 16 J 15/32**

(54) **Dichtung.**

(30) Priorität : 03.05.83 DE 3316063

(43) Veröffentlichungstag der Anmeldung :
07.11.84 Patentblatt 84/45

(45) Bekanntmachung des Hinweises auf die Patenterteilung : 16.06.87 Patentblatt 87/25

(84) Benannte Vertragsstaaten :
AT BE CH DE FR GB IT LI LU NL SE

(56) Entgegenhaltungen :
DE-A- 2 842 694
FR-A- 2 296 798
US-A- 3 250 541
US-A- 3 929 341

(73) Patentinhaber : **Firma Carl Freudenberg**
**Höhnerweg 4**
**D-6940 Weinheim/Bergstrasse (DE)**

(72) Erfinder : **Hayashida, Kunimatsu**
**Königsberger Strasse 26**
**D-6940 Weinheim (DE)**
Erfinder : **Rapp, Hermann, Dr.**
**Ofenbergstrasse 36**
**D-6942 Mörlenbach (DE)**
Erfinder : **Fuchs, Dieter**
**Asternweg 8**
**D-6086 Riedstadt (DE)**

(74) Vertreter : **Weissenfeld-Richters, Helga, Dr.**
**Höhnerweg 2**
**D-6940 Weinheim/Bergstrasse (DE)**

## Beschreibung

Die Erfindung betrifft eine Dichtung für ein hin- und hergehendes und/oder Drehbewegungen ausführendes Maschinenteil, bestehend aus einem Versteifungsring und einem flüssigkeitsdicht damit verbundenen Lippenring aus PTFE, der die Gestalt einer dünnen, trompetenartig verformten Scheibe hat und mit zwei durch einen axialen Abstand getrennten Bereichen an dem abzudichtenden Maschinenteil anliegt.

Eine solche Dichtung wird in US-A 32 50 541 beschrieben. Die aus einer dünnen, trompetenartig verformten Scheibe bestehende Dichtlippe ist in Richtung des abgedichteten Raumes vorgewölbt. Sie liegt unter einer elastischen Vorspannung an dem relativ bewegten Maschinenteil an und hat nur eine sehr geringe mechanische Steifigkeit. Ein ordnungsgemäßer Einbau ist daher nur aus Richtung des abgedichteten Raumes möglich, was in vielen Fällen große Schwierigkeiten bereitet. Richtungsverkehrter Einbau führt zu einem schlechten Abdichtungsergebnis.

DE-A 28 42 694 nimmt Bezug auf einen Wellendichtring, bei dem die Dichtlippe auf der dem abgedichteten Medium zugewandten Seite mit dem Versteifungsring verbunden ist und in Richtung der der Außenluft zugewandten Seite axial vorspringt. Diese Dichtung läßt sich gut von der Außenseite einbauen, ihre Herstellung ist jedoch wegen der relativ komplizierten Form der Dichtlippe und der für deren ausreichende Anpressung benötigten Ringwendelfeder verhältnismäßig teuer.

Der Erfindung liegt die Aufgabe zugrunde, eine Dichtung der eingangs genannten Art derart weiter zu entwickeln, daß ein gutes Betriebsverhalten, insbesondere gute Lauf- und Dichtungseigenschaften erhalten werden, wenn die Dichtlippe in Richtung der vom abgedichteten Raumes abgewandten Seite vorspringt. Die Dichtung soll einfach herstellbar sein.

Diese Aufgabe wird erfindungsgemäß mit den kennzeichnenden Merkmalen des Patentanspruches 1 gelöst. Auf vorteilhafte Ausgestaltungen nehmen die Unteransprüche Bezug.

Die vorgeschlagene Ausführung zeichnet sich im Gegensatz zu derjenigen nach US-A 32 50 541 durch ein ausgezeichnetes Betriebsverhalten auch dann aus, wenn der Einbau in Richtung des abgedichteten Raumes erfolgt. Dieser überraschende Effekt ist nach Ansicht der Erfinder maßgeblich auf das Vorhandensein von hydrodynamisch wirkenden Rückförderelementen auf der Innenseite der trompetenartig verformten Scheibe zurückzuführen, verbunden mit dem axialen Abstand zwischen der Dichtfläche und der Führungsfläche. Der speziellen Ausbildung der hydrodynamisch wirkenden Rückförderelemente kommt insofern eine erhebliche Bedeutung zu, und es hat sich als vorteilhaft bewährt, wenigstens zwei gleichgerichtete und einander durchdringende Rückförderelemente und/oder Gruppen von Rückförderelementen vorzusehen, die sich durch eine unterschiedliche Profiltiefe und/oder Steigung voneinander unterscheiden. Die Rückförderelemente können beispielsweise durch spiralig verlaufende Rippen und/oder Nuten gebildet werden und gegebenenfalls einander unterbrechen. Das Verhältnis aus der Profiltiefe und/oder der Steigung der einander durchdringenden. Rückförderelemente variiert im Verhältnis 1 : 3 bis 1 : 300, bevorzugt innerhalb eines Bereiches von 1 : 50 bis 1 : 100. Insbesondere im letztgenannten Falle wird sowohl bei der vollkommen neuwertigen Dichtung als auch bei längerem Gebrauch ein ausgezeichnetes Abdichtungsergebnis erzielt. Das Profil ist bevorzugt symmetrisch begrenzt und der Oberfläche zugeordnet. Eine unsymmetrische Ausbildung und-/oder Zuordnung wenigstens eines der beiden Rückförderelemente zur Oberfläche der Scheibe erlaubt eine Modifizierung der Strömungsverhältnisse, was beispielsweise in bezug auf die Vermeidung von Ablagerungen aus Ölkohle wichtig ist. Eine unsymmetrische Ausbildung und/oder Zuordnung hat insbesondere für die Ausbildung von Rückförderelementen eines ausreichend großen Querschnittes oder Abstandes Bedeutung. Die Mittellinie entsprechend ausgebildeter Drallrippen und/oder -nuten schließt in diesem Falle mit der Oberfläche der kreisringförmigen Scheibe einen Winkel von 25 bis 55° ein, bevorzugt einen Winkel von 40°, bezogen auf den Mittelpunkt.

Dichtungs- und Führungsfläche sind bei der vorgeschlagenen Ausführung durch einen axialen Abstand getrennt, bevorzugt durch eine nach innen gerichtete Abkantung des Profils der Scheibe. Diese erfährt im Zwischenraum keinerlei Schwächung ihres Querschnittes, was eine gute Stabilität der gegenseitigen Zuordnung zwischen Dicht- und Führungsfläche bedingt. Radiale Verlagerungen des abgedichteten Maschinenteiles, beispielsweise in Gestalt von Wellenschwingungen bei Maschinenan- und -auslauf vermögen daher die Dichtfläche nicht nachteilig zu schädigen. Die Führungsfläche hat außerdem die Aufgabe, Schmutz von der Dichtfläche fernzuhalten.

Eine beispielhafte Ausführung der vorgeschlagenen Dichtung ist in der in der Anlage beigefügten Zeichnung in halbgeschnittener Darstellung wiedergegeben. Es zeigen :

Figur 1  die eingebaute Dichtung in halbgeschnittener Darstellung.

Figur 2  ausschnittsweise das Profil der in der Dichtung verwendeten Scheibe vor der Verformung.

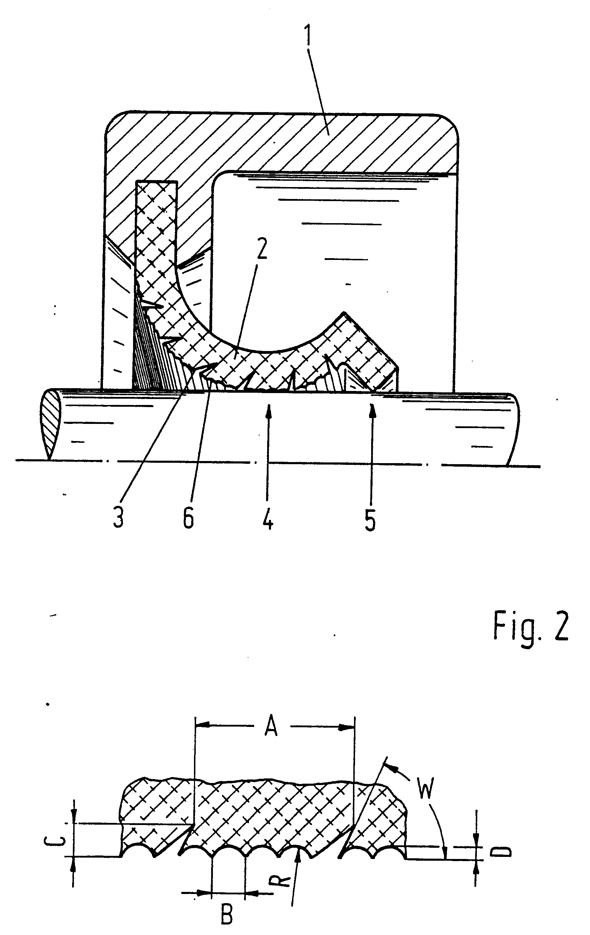

Die in Figur 1  gezeigte Dichtung besteht aus einem Versteifungsring 1 aus Kunstharz, der unmittelbar an den sich in radialer Richtung erstreckenden Halteteil der dünnen, trompetenartig verformten Scheibe 2 aus PTFE angeformt ist.

Die Scheibe liegt in einem axialen Abstand von dem Halteteil an der abgedichteten Welle mit einem Durchmesser von 85 mm an. Der axiale Abstand zwischen der Anlagefläche und dem Halteteil entspricht wenigstens der Dicke der Scheibe. Diese weist auf der Innenseite hydrodynamisch wirkende Rückförderelemente 3 auf, die unter der Dichtfläche 4 hindurchgedrungene Leckflüssigkeit zurück in den abgedichteten Raum pumpen.

Die Rückförderelemente werden durch zwei einander unterbrechende, spiralig ausgeführte Rillen 3, 6 gebildet.

Die erste dieser beiden Rillen 6 hat ein halbkreisförmig begrenztes Profil mit einem Radius von 0,2 mm. Die Rille umschließt die Rotationsache nach Art einer Spirale, wobei die Teilung 0,25 mm beträgt bei einer Tiefe D von 40 μm.

Die zweite der beiden Rillen 3 hat ein spitzwinklig eingeschnittenes, symmetrisches Dreiecksprofil mit einer größten Tiefe von 0,4 mm. Die Rille umschließt die Rotationsachse spiralig mit einer Teilung von 0,8 mm. Die Symmetrieachse des Dreiecksprofils schließt mit der Rotationsachse einen Winkel von 40° ein, wodurch die Rille der Oberfläche der Scheibe unsymmetrisch zugeordnet ist. Die Rille 6 wird in ihrem Verlauf durch die Rille 3 stetig unterbrochen.

Die Führungsfläche der in Richtung der druckabgewandten Seite mit einer einfachen Abbiegung vorgewölbten Scheibe ist mit 5 bezeichnet. Sie wird durch die Stirnfläche einer nach innen gerichteten Abkantung des Profils der Scheibe 2 gebildet, die in mechanischer Hinsicht stabilisierend wirkt und beiden angrenzenden Bereichen eine gute Formstabilität verleiht. Die Winkel, die von dem abgedichteten Maschinenteil und der Dicht- und Führungsfläche in den verschiedenen Bereichen eingeschlossen werden, bleiben dadurch auch nach längerer Zeit erhalten, was für die guten Gebrauchseigenschaften offenbar ebenfalls von erheblicher Bedeutung ist.

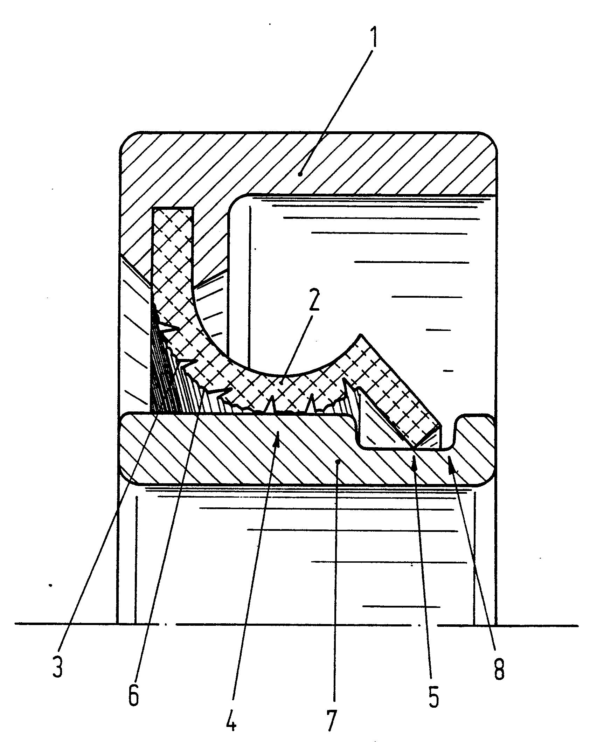

Figur 3 zeigt eine Ausführung, bei der die Führungsfläche in eine umlaufende Nut 8 des abgedichteten Maschinenteiles eingreift, im vorliegenden Falle in die Nut einer Schleißbüchse 7. Die axialen Begrenzungsflächen der Nut erstrecken sich senkrecht zur Rotationsachse und haben beiderseits einen geringen Abstand von der Abkantung. Sie bewirken deren axiale Abstützung und Führung beim Auftreten höherer Drücke. Die Bereitstellung einer entsprechend ausgebildeten Schleißbüchse kann gegebenenfalls gemeinsam mit der Dichtung erfolgen. Der vorstehend beschriebene Einbau der Dichtung wird durch die Nut nicht behindert.

**Patentansprüche**

1. Dichtung für ein hin- und hergehendes und/oder Drehbewegungen ausführendes Maschinenteil, bestehend aus einem Versteifungsring und einem flüssigkeitsdicht verbundenen Lippenring aus PTFE, der die Gestalt einer dünnen, trompetenartig verformten Scheibe hat und mit zwei durch einen axialen Abstand getrennten Bereichen an dem abzudichtenden Maschinenteil anliegt, dadurch gekennzeichnet, daß die trompetenartig verformte Scheibe (2) wenigstens auf der Innenseite mit hydrodynamisch wirkenden Rückförderelementen (3) versehen ist, daß der dem abzudichtenden Medium (M) zugewandte Bereich als Dichtfläche (4) und der von dem abzudichtenden Medium abgewandte Bereich als Führungsfläche (5) ausgebildet ist und daß die Scheibe axial zwischen Dicht- und Führungsfläche (4, 5) einerseits und dem abzudichtenden Raum (M) andererseits in dem Versteifungsring (1) festgelegt ist.

2. Dichtung nach Anspruch 1, dadurch gekennzeichnet, daß die trompetenartig verformte Scheibe (2) auf der Innenseite wenigstens zwei gleichgerichtete und einander durchdringende Rückförderelemente (3) unterschiedlicher Profiltiefe und/oder Steigung aufweist.

3. Dichtung nach Anspruch 2, dadurch gekennzeichnet, daß das Verhältnis aus der Profiltiefe und/oder der Steigung der einander durchdringenden Rückförderelemente (3) 1 : 3 bis 1 : 300 beträgt.

4. Dichtung nach Anspruch 2 bis 3, dadurch gekennzeichnet, daß das Verhältnis aus der Profiltiefe und/oder der Steigung der einander durchdringenden Rückförderelemente 1 : 50 bis 1 : 100 beträgt.

5. Dichtung nach Anspruch 1 bis 4, dadurch gekennzeichnet, daß die Dichtfläche (4) und die Führungsfläche (5) durch eine nach innen gerichtete Abkantung des Profils der Scheibe (2) getrennt sind.

**Claims**

1. A seal for a reciprocating and/or rotating machine part, comprising a reinforcing ring and a lip ring made of PTFE which is connected in liquid-tight fashion and has the shape of a thin disc deformed in the manner of a trumpet and lies in contact through two axially spaced areas with the machine part to be sealed off, characterised in that the disc (2) which is deformed in the manner of a trumpet is provided at least on the inside with hydrodynamically acting return elements (3), in that the region turned toward the medium (M) to be sealed off is designed as a sealing surface (4) and the region turned away from the medium to be sealed off is designed as a guide surface (5), and in that the disc is fixed in the reinforcing ring (1) axially between sealing and guide surfaces (4, 5) on the one hand and the space (M) to be sealed off on the other hand.

2. A seal according to claim 1, characterised in that the disc (2) which is deformed in the manner of a trumpet has on the inside at least two return elements (3) which point in the same direction, penetrate one another and have different depths of profile and/or pitches.

3. A seal according to claim 2, characterised in that the ratio between the depths of profile and/or the pitches of the return elements (3) penetrating one another is from 1 : 3 to 1 : 300.

4. A seal according to claim 2 or 3, characterised in that the ratio between the depths of profile and/or the pitches of the return elements penetrating one another is from 1 : 50 to 1 : 100.

5. A seal according to any of claims 1 to 4, characterised in that the sealing surface (4) and the guide surface (5) are separated by an inwardly directed bevelled edge of the profile of the disc (2).

**Revendications**

1. Joint pour une pièce de machine effectuant un mouvement alternatif et/ou de rotation et constitué d'une bague raidisseuse et d'une bague à lèvres en PTFE reliée à celle-ci de manière étanche aux liquides qui a la forme d'un disque mince déformé en forme de trompette et qui appuie par deux zones séparées par un intervalle axial sur la pièce de machine à rendre étanche, caractérisé en ce que le disque déformé en forme de trompette (2) est pourvu au moins sur la face intérieure d'éléments de renvoi (3) à effet hydrodynamique, en ce que la zone tournée vers le fluide à contenir de manière étanche (M) joue le rôle de surface d'étanchéité (4) en ce que la zone opposée au fluide à contenir de manière étanche joue le rôle de surface de guidage (5) et en ce que le disque est fixé axialement entre les surfaces d'étanchéité et de guidage (4, 5) d'une part et l'enceinte (M) à rendre étanche d'autre part dans la bague raidisseuse (1).

2. Joint selon la revendication 1, caractérisé en ce que le disque (2) déformé en forme de trompette présente sur la face intérieure au moins deux éléments de renvoi (3) orientés dans le même sens et s'interpénétrant dont les profondeurs de profil et/ou les pentes sont différentes.

3. Joint selon la revendication 2, caractérisé en ce que le rapport des profondeurs de profil et/ou des pentes des éléments de renvoi (3) s'interpénétrant est compris entre 1 : 3 et 1 : 300.

4. Joint selon les revendications 2 et 3, caractérisé en ce que le rapport des profondeurs de profil et/ou des pentes des éléments de renvoi s'interpénétrant est compris entre 1 : 50 et 1 : 100.

5. Joint selon les revendications 1 à 4, caractérisé en ce que la surface d'étanchéité (4) et la surface de guidage (5) sont séparées par un chanfrein du profil du disque (2) tourné vers l'intérieur.

Fig. 2